(19) Europäisches Patentamt

European Patent Office

Office européen des brevets

(11) **EP 0 589 352 B1**

(12) **EUROPÄISCHE PATENTSCHRIFT**

(45) Veröffentlichungstag und Bekanntmachung des Hinweises auf die Patenterteilung:
**28.08.1996  Patentblatt 1996/35**

(51) Int Cl.$^6$: **C08F 10/10**, C08F 2/38

(21) Anmeldenummer: **93114895.1**

(22) Anmeldetag: **16.09.1993**

(54) **Verfahren zur Reaktionsregelung bei der Herstellung von Polyisobutylen**

Process for reaction control during the manufacture of polyisobutylene

Procédé pour le réglage de la réaction pour la préparation de polyisobutène

(84) Benannte Vertragsstaaten:
**BE DE ES FR GB IT NL**

(30) Priorität: **23.09.1992  DE 4231748**

(43) Veröffentlichungstag der Anmeldung:
**30.03.1994  Patentblatt 1994/13**

(73) Patentinhaber: **BASF Aktiengesellschaft**
**67063 Ludwigshafen (DE)**

(72) Erfinder:
• **Fauth, Karl-Heinz**
**D-6719 Wattenheim (DE)**

• **Isbarn, Gunther, Dr.**
**D-6700 Ludwigshafen (DE)**

(56) Entgegenhaltungen:
EP-A- 0 363 706          US-A- 2 384 916
US-A- 2 637 720          US-A- 3 271 375
US-A- 5 068 490

• **PATENT ABSTRACTS OF JAPAN vol. 14, no. 4941 (C-77) & JP-A-52 151 381 (NIPPON GOSEI GOMU K.K.) 15. Dezember 1977**
• **PATENT ABSTRACTS OF JAPAN vol. 14, no. 4941 (C-77) & JP-A-52 151 381**

## Beschreibung

Die vorliegende Erfindung betrifft ein Verfahren zur Reaktionsregelung bei der Herstellung von Polyisobutylen durch Polymerisation von Isobutylen bei Temperaturen von -130 bis 0°C in Gegenwart von 0,01 bis 1,0 Gew.-% eines Friedel-Crafts-Katalysators, 0,0001 bis 0,1 Gew.-% eines Molmassenreglers und eines unter den Reaktionsbedingungen inerten, niedrigsiedenden Lösungsmittels, wobei die Gew.-% jeweils auf das eingesetzte Isobutylen bezogen sind, bei welchem man das bei der Polymerisation verdampfte Lösungsmittel kontinuierlich abzieht, verflüssigt und im flüssigen Zustand erneut der Polymerisationszone hinzufügt.

Es ist bekannt, daß die kationische Polymerisation von Isobutylen durch Zugabe von Reglerstoffen entweder beschleunigt oder gehemmt werden kann ("Polyisobutylen", H. Güterbock, Springer-Verlag, Berlin, Göttingen, Heidelberg, 1959). "Beschleuniger" bewirken dabei in geringen Mengen eine Aktivierung der Katalysatoren und damit eine Beschleunigung des Reaktionsablaufs, die mit einer Erhöhung der Molmasse verbunden ist. Ihrer chemischen Natur nach sind sie Protonendonatoren, die mit dem üblicherweise eingesetzten Friedel-Crafts-Katalysator einen positiv geladenen Komplex eingehen, der wiederum als der eigentliche Katalysator für die kationische Polymerisation von Isobutylen bezeichnet werden kann. Als Beschleuniger werden beispielsweise Säuren, Aldehyde, Alkohole oder Wasser verwendet.

Eine gegenteilige Wirkung, nämlich eine Verlängerung der Reaktionszeit und eine Erniedrigung der Molmasse, geht von sogenannten "Verzögerern" aus. Für die kationische Polymerisation von Isobutylen ist die verzögernde Wirkung von Buten-1 bereits seit langem bekannt (DE-PS 641 284). Bei der Herstellung von Polyisobutylen verwendet man häufig zwei verschiedene Molmassenregler, d.h. sowohl einen "Beschleuniger" als auch einen "Verzögerer", wobei man ihre Wirkungen über die dabei eingesetzten Mengenverhältnisse entsprechend steuern kann.

In der DE-OS 3 527 551 wird das bisher übliche technische Herstellungsverfahren für Polyisobutylene beschrieben, welches sich u.a. dadurch auszeichnet, daß man dem Isobutylen etwa 2 Gew.-% Buten-1 als "Verzögerer" hinzusetzt. Häufig wird bei dem dort beschriebenen Verfahren neben diesem Buten-1 noch als Beschleuniger ein Alkohol eingesetzt. Das Buten-1 nimmt an der kationischen Polymerisation nicht teil, sondern findet sich nach der Polymerisation nahezu quantitativ im Lösungsmittel-Kreisgas wieder. Das in dieser Offenlegungsschrift beschriebene Verfahren hat den Nachteil, daß das Buten-1 anschließend vom Lösungsmittel-Kreisgas abgetrennt und entweder verbrannt oder aber aufwendig zum Wiedereinsatz gereinigt werden muß. Darüber hinaus ist das Hinzufügen von etwa 2 Gew.-% Buten-1 als Regler verfahrenstechnisch mit einem gewissen Aufwand verbunden.

Der vorliegenden Erfindung lag daher die Aufgabe zugrunde, ein verbessertes Verfahren zur Reaktionsregelung bei der Herstellung von Polyisobutylen zu entwickeln, welches die geschilderten Nachteile nicht aufweist und bei welchem auf die Zugabe größerer Mengen eines Molmassenreglers verzichtet werden kann.

Demgemäß wurde das eingangs definierte Verfahren zur Reaktionsregelung bei der Herstellung von Polyisobutylen gefunden.

Dieses erfindungsgemäße Verfahren ist dadurch gekennzeichnet, daß als Molmassenregler Vinylether verwendet werden. Vorzugsweise werden dabei als Molmassenregler Vinylether der allgemeinen Formel (I) verwendet,

$$R\text{-}O\text{-}CH\text{=}CH_2 \hspace{4cm} (I)$$

bei denen R für eine $C_1$-$C_8$-Alkylgruppe, insbesondere für eine $C_3$-$C_5$-Alkylgruppe steht. Als besonders bevorzugte Molmassenregler sind in diesem Zusammenhang Isobutylvinylether und tert.-Butylvinylether zu nennen. Die erfindungsgemäß zu verwendenden Molmassenregler wirken dabei sowohl als "Beschleuniger" als auch als "Verzögerer" der kationischen Polymerisation. Derartige Vinylether können nach Verfahren, die dem Fachmann bekannt sind, synthetisiert werden.

Verfahren zur Herstellung von Polyisobutylen sind insbesondere aus der DE-OS 3 527 551 bekannt, so daß bezüglich näherer Einzelheiten auf diese Offenlegungsschrift verwiesen werden kann. Das erfindungsgemäße Verfahren zur Reaktionsregelung bei der Herstellung von Polyisobutylen kann für die in der Technik gebräuchlichen kationischen Polymerisationsarten angewandt werden. Das erfindungsgemäße Verfahren eignet sich sowohl für eine kontinuierliche als auch für eine diskontinuierliche kationische Polymerisation und kann als Gasphasenpolymerisation, als Lösungspolymerisation oder auch als Suspensionspolymerisation in den üblichen Reaktoren durchgeführt werden. Es eignet sich besonders u.a. für die kationische Isobutylenpolymerisation nach dem sogenannten Bandverfahren, wobei man Isobutylen in reinem, getrocknetem, flüssigem Ethylen auf einem schwach geneigten, endlosen Stahlband kationisch polymerisiert. Weitere besonders bevorzugte Verfahren zur kationischen Isobutylenpolymerisation, bei denen das erfindungsgemäße Verfahren vorteilhaft eingesetzt werden kann, sind in Ullmanns Encyklopädie der technischen Chemie, Verlag Chemie GmbH, Weinheim, 1980, in Band 19 auf den Seiten 216-223 beschrieben.

Die kationische Isobutylenpolymerisation wird nach dem erfindungsgemäßen Verfahren üblicherweise bei Temperaturen von -130 bis 0°C, insbesondere bei der Siedetemperatur des flüssigen Ethens (-103,7°C) durchgeführt.

Dabei erfolgt die kationische Isobutylenpolymerisation vorteilhaft in Gegenwart von 0,01 bis 1,0 Gew.-%, insbesondere in Gegenwart von 0,02 bis 1,0 Gew.-% eines Friedel-Crafts-Katalysators, wobei sich die Gew.-% jeweils auf das eingesetzte Isobutylen beziehen. Als bevorzugte Friedel-Crafts-Katalysatoren sind in diesem Zusammenhang neben Bortrifluorid, Bortrichlorid, Bortribromid und Bortrijodid u.a. noch die Halogenide des Zinns, des Titans, des Aluminiums, des Antimons und des Eisens zu erwähnen, wobei insbesondere Bortrifluorid verwendet wird.

Weiterhin werden nach dem erfindungsgemäßen Verfahren 0,0001 bis 0,1 Gew.-%, insbesondere 0,0005 bis 0,08 Gew.-% eines Vinylethers als Molmassenregler eingesetzt, wobei sich auch hier die Mengenangaben auf das eingesetzte Isobutylen beziehen. Dabei kann der Vinylether je nach vorliegender Menge sowohl als "Beschleuniger" als auch als "Verzögerer" der kationischen Polymerisation wirken. In der Regel beobachtet man bei Vinylether-Konzentrationen von weniger als 0,05 Gew.-% eine beschleunigende Wirkung, bei höheren Vinylether-Konzentrationen dagegen eine verzögernde Wirkung. Nach dem erfindungsgemäßen Verfahren kann es sich noch empfehlen, neben dem Vinylether noch bis zu 4 Gew.-%, insbesondere bis zu 1 Gew.-% an üblichen Beschleunigern wie beispielsweise Säuren, Aldehyde, Alkohole oder auch Wasser mitzuverwenden. In vielen Fällen benötigt man aber für das erfindungsgemäße Verfahren keine weiteren Beschleuniger.

Als Lösungsmittel werden im erfindungsgemäßen Verfahren üblicherweise niedrigsiedende, unter den Reaktionsbedingungen inerte Lösungsmittel verwendet, beispielsweise Methan, Ethan, Propan und insbesondere Ethylen. Diese Lösungsmittel sind u.a. deshalb besonders gut geeignet, da durch ein teilweises Verdampfen derselben unter den Bedingungen der kationischen Polymerisation die Polymerisationswärme des Isobutylens auf einfache Weise abgeführt werden kann. Das während der Polymerisation verdampfte Lösungsmittel wird nach dem erfindungsgemäßen Verfahren kontinuierlich abgezogen, verflüssigt und im flüssigen Zustand erneut der Polymerisationszone zugeführt. Die dabei eingesetzten Lösungsmittel wirken deswegen auch gleichzeitig als Kühlmittel. Im allgemeinen enthält das Reaktionsgemisch des erfindungsgemäßen Verfahrens 30 bis 90 Gew.-%, insbesondere 50 bis 70 Gew.-% Lösungsmittel, wobei sich die Mengenangaben wiederum auf das Isobutylen beziehen.

Mit Hilfe des erfindungsgemäßen Verfahrens kann die gewünschte Reaktionsgeschwindigkeit sowie die angestrebte Molmasse der Polyisobutylene durch einfaches Einstellen von bestimmten Vinylethermengen kontrolliert werden. Aufgrund der Tatsache, daß als "Beschleuniger" sowie als "Verzögerer" nur ein Reaktionsregler verwendet wird, ist das erfindungsgemäße Verfahren weniger aufwendig wie die aus dem Stand der Technik bekannten Verfahren. Der erwünschte ruhige Reaktionsverlauf bei der kationischen Isobutylenpolymerisation kann über die Mengen der verwendeten Vinylether leicht eingestellt werden. Ein weiterer Vorteil des erfindungsgemäßen Verfahrens, bei dem nur relativ geringe Vinylethermengen verwendet werden, ist darin zu sehen, daß die Notwendigkeit entfällt, größere Mengen an Molmassenreglern, beispielsweise an Buten-l aus dem Lösungsmittel-Kreisgas abzutrennen, zu verbrennen oder aber destillativ aufzuarbeiten.

Das erfindungsgemäße Verfahren eignet sich vor allem zur Herstellung von Polyisobutylen durch kationische Isobutylenpolymerisation. Die dadurch erhältlichen Polyisobutylene weisen viskositätsmittlere Molmassen ($\overline{M}_v$) von $10^5$ bis $10^7$, insbesondere von $0,2 \cdot 10^6$ bis $0,8 \cdot 10^7$ auf. Diese hochmolekularen Polyisobutylene sind bei Temperaturen von etwa 150 bis 200°C thermoplastisch verarbeitbar.

Beispiele 1 bis 7 und Vergleichsbeispiel A

In einem Reaktionsgefäß mit einem Volumen von 400 ml wurde Isobutylen in reinem flüssigem Ethylen polymerisiert. Die Reaktionstemperatur betrug dabei -103,7°C. Bezogen auf das Isobutylen wurden 65 Gew.-% Ethylen als Lösungsmittel und 0,2 Gew.-% Bortrifluorid als Friedel-Crafts-Katalysator verwendet. Das verdampfte Ethylen wurde während der Polymerisation kontinuierlich abgezogen.

In der nachfolgenden Tabelle sind für die erfindungsgemäßen Beispiele 1 bis 7 sowie für das Vergleichsbeispiel jeweils die Menge des hinzugefügten Molmassenreglers ( es wurde tert.-Butylvinylether verwendet), die Zeit der Reaktionsinkubation, die gesamte Reaktionszeit, die Ausbeute sowie die Molmasse und die Farbe des dabei erhaltenen Polyisobutylens aufgeführt. Darüber hinaus wurden jeweils Bemerkungen über den Reaktionsverlauf abgegeben. Im Falle des Vergleichsbeispiels A wurde kein Molmassenregler verwendet.

Die Molmasse des dabei erhaltenen Polyisobutylens wurde durch viskosimetrische Messungen (nach DIN 51 562) ermittelt.

Tabelle

| | Menge des verwendeten tert.-Butyl-vinylethers [Gew.-%] | Reaktions-inkubation [Sek.] | Reaktions-zeit [Sek.] | Ausbeute [%] | Molmasse $[\bar{M}v] \bullet 10^6$ | Färbung des Polymerisats | Reaktions-verlauf |
|---|---|---|---|---|---|---|---|
| Vergleichs-beispiel A | 0 | 1,7 | 12 | 99,25 | 8,0 | farblos | ruhig |
| Beispiel 1 | 0,0005 | 1,4 | 11 | 99,60 | 8,5 | farblos | ruhig |
| Beispiel 2 | 0,0010 | 1,4 | 9 | 99,30 | 8,0 | farblos | etwas unruhig |
| Beispiel 3 | 0,0025 | 1,4 | 6 | 99,60 | 6,0 | gelb | unruhig |
| Beispiel 4 | 0,0050 | 1,3 | 5 | 99,20 | 4,0 | hellbraun | spritzt |
| Beispiel 5 | 0,0100 | 1,6 | 9 | 99,50 | 3,7 | hellbraun | ruhig |
| Beispiel 6 | 0,0250 | 7 | 177 | 97,50 | 1,7 | braun | ruhig |
| Beispiel 7 | 0,0500 | 15 | 323 | 87,50 | 0,3 | dunkelbraun | zu ruhig |

Aus den Beispielen 1 bis 7 und dem Vergleichsbeispiel A geht u.a. hervor, daß die Zugabe von relativ geringen Mengen an tert.-Butylvinylether zunächst zu einer Beschleunigung des Reaktionsablaufs (Verringerung der Reaktionszeit) führt, was einhergeht mit einer weiterhin sehr hohen Ausbeute (siehe Beispiele 1 und 2 im Vergleich zum Vergleichsbeispiel A). Mit steigenden Mengen an tert.-Butylvinylether beobachtet man bei weiterhin sehr hohen Ausbeuten und einer weiteren Beschleunigung des Reaktionsablaufs eine zunehmend unruhige Reaktion (Beispiele 3 und 4). Bei noch höheren Mengen an tert.-Butylvinylether wird der Reaktionsverlauf wieder ruhiger, zugleich ist aber eine deutliche Verlangsamung der Reaktionsgeschwindigkeit und eine allmähliche Abnahme der Ausbeute festzustellen (Beispiele 5 bis 7). In diesen Fällen wirkt der tert.-Butylvinylether zunehmend als Verzögerer der kationischen Isobutylenpolymerisation.

**Patentansprüche**

1. Verfahren zur Reaktionsregelung bei der Herstellung von Polyisobutylen durch Polymerisation von Isobutylen bei Temperaturen von -130 bis 0°C in Gegenwart von 0,01 bis 1,0 Gew.-% eines Friedel-Crafts-Katalysators, 0,0001 bis 0,1 Gew.-% eines Molmassenreglers und eines unter den Reaktionsbedingungen inerten, niedrig siedenden Lösungsmittels, wobei die Gew.-% jeweils auf das eingesetzte Isobutylen bezogen sind, bei welchem man das bei der Polymerisation verdampfte Lösungsmittel kontinuierlich abzieht, verflüssigt und im flüssigen Zustand erneut der Polymerisationszone hinzufügt, dadurch gekennzeichnet, daß als Molmassenregler Vinylether verwendet werden.

2. Verfahren nach Anspruch 1, dadurch gekennzeichnet, daß als Molmassenregler Vinylether der allgemeinen Formel (I) verwendet werden,

$$R\text{-}O\text{-}CH\text{=}CH_2 \qquad\qquad (I)$$

bei denen R für eine $C_1$-$C_8$-Alkylgruppe steht.

3. Verfahren nach den Ansprüchen 1 oder 2, dadurch gekennzeichnet, daß als Molmassenregler solche Vinylether der allgemeinen Formel (I) verwendet werden, in denen R für eine $C_3$-$C_5$-Alkylgruppe steht.

4. Verfahren nach den Ansprüchen 1 bis 3, dadurch gekennzeichnet, daß als Molmassenregler Isobutylvinylether oder tert.-Butylvinylether verwendet wird.

5. Verfahren nach den Ansprüchen 1 bis 4, dadurch gekennzeichnet, daß der Molmassenregler in Mengen von 0,0005 bis 0,08 Gew.-%, bezogen auf das eingesetzte Isobutylen, verwendet wird.

**Claims**

1. A process for regulating the reaction in the preparation of polyisobutylene by polymerizing isobutylene at from -130 to 0°C in the presence of from 0.01 to 1.0% by weight of a Friedel-Crafts catalyst, from 0.0001 to 0.1% by weight of a molecular weight regulator, and a low boiling point solvent that is inert under the reaction conditions, the percentages by weight being based in each case on isobutylene, in which the solvent that has evaporated in the polymerization is continuously removed, liquefied and recycled in the liquid state to the polymerization zone, wherein vinyl ethers are used as molecular weight regulators.

2. A process as claimed in claim 1, wherein vinyl ethers of the formula (I)

$$R\text{-}O\text{-}CH\text{=}CH_2 \qquad\qquad (I)$$

in which R is a $C_1$-$C_8$-alkyl group are used as molecular weight regulators.

3. A process as claimed in claim 1 or 2, wherein vinyl ethers of the formula (I) in which R is a $C_3$-$C_5$-alkyl group are used as molecular weight regulators.

4. A process as claimed in any of claims 1 to 3, wherein isobutyl vinyl ether or tert-butyl vinyl ether is used as molecular weight regulator.

5. A process as claimed in any of claims 1 to 4, wherein the molecular weight regulator is used in amounts of from 0.0005 to 0.08% by weight, based on isobutylene.

**Revendications**

1. Procédé de régulation de la réaction dans la préparation de polyisobutylène par polymérisation d'isobutylène à des températures de -130 à 0°C, en présence de 0,01 à 1,0% en poids d'un catalyseur de Friedel-Crafts, de 0,0001 à 0,01% en poids d'un régulateur de masse moléculaire et d'un solvant de bas point d'ébullition, inerte dans les conditions de la réaction, les pourcentages en poids se rapportant chacun à l'isobutylène mis en réaction, le solvant évaporé au cours de la polymérisation étant extrait en continu, liquéfié et renvoyé dans la zone de polymérisation à l'état liquide, caractérisé en ce que des éthers vinyliques sont utilisés comme régulateur de masse moléculaire.

2. Procédé selon la revendication 1, caractérisé en ce que l'on utilise, comme régulateur de masse moléculaire, des éthers vinyliques de formule générale (I)

$$R\text{-}O\text{-}CH=CH_2 \tag{I}$$

dans laquelle R est mis pour un groupement alkyle en $C_1$-$C_8$.

3. Procédé selon la revendication 1 ou 2, caractérisé en ce que l'on utilise, comme régulateur de masse moléculaire, des éthers vinyliques de formule générale (I) dans laquelle R est mis pour un groupement alkyle en $C_3$-$C_5$.

4. Procédé selon l'une quelconque des revendications 1 à 3, caractérisé en ce que l'on utilise, comme régulateur de masse moléculaire, l'oxyde d'isobutyle et de vinyle ou l'oxyde de tert.-butyle et de vinyle.

5. Procédé selon l'une quelconque des revendications 1 à 4, caractérisé en ce que l'on utilise le régulateur de masse moléculaire dans des proportions de 0,0005 à 0,08% en poids, par rapport à l'isobutylène mis en réaction.